# EUROPEAN PATENT APPLICATION

(11) **EP 1 566 414 A1**
(43) Date of publication of application: **24.08.2005**
(21) Application number: 03772717.9
(22) Date of filing: 12.11.2003
(51) Int. Cl.: C09D 4/02, B32B 7/02, B32B 27/16, C09J 7/02, G09F 9/00, C08J 7/04

(54) **ULTRAVIOLET-CURABLE ANTISTATIC HARD COATING RESIN COMPOSITION**

(30) Priority: 13.11.2002 JP 2002329385; 14.05.2003 JP 2003136180
(71) Applicant: DENKI KAGAKU KOGYO KABUSHIKI KAISHA, Tokyo 100-8455 (JP)
(72) Inventor: GOTO, Yoshitsugu c/o Denki Kagaku Kabushiki Kaisha, Shibukawa-shi, Gunma 377-0002 (JP); KAZAMI, Junichi c/o Denki Kagaku Kabushiki Kaisha, Shibukawa-shi, Gunma 377-0002 (JP); IRIUCHIJIMA, kunio c/o Denki Kagaku Kabushiki K., Shibukawa-shi, Gunma 377-0002 (JP)
(74) Representative: Hartz, Nikolai
(86) International application number: PCT/JP2003/014387
(87) International publication number: WO 2004/044063

(57) **Abstract**

The invention presents an ultraviolet curable hard coating resin composition which is transparent and excellent in an antistatic property and which is suitable to cover the surface of a plastic film or sheet, and an antistatic hard coating film or sheet provided with an antistatic layer made of such a resin composition.

An antistatic hard coating resin composition curable by ultraviolet irradiation, which comprises electroconductive zinc oxide having an average particle size of primary particles of at most 0.05 µm, an ultraviolet curable (meth)acrylate having at least one (meth)acryloyl group per molecule, and a photopolymerization initiator, wherein the content of the electroconductive zinc oxide component is from 50 to 95 mass% based on the total amount of all components. The composition preferably further contains a silane coupling agent or a tertiary amine having two or more hydroxyl groups per molecule, as a dispersing agent.

## Description

### TECHNICAL FIELD

The present invention relates to an ultraviolet curable hard coating resin composition which is transparent and excellent in scratch resistance and antistatic property and which is suitable to cover the surface of a plastic film or sheet made of polyester, acryl, polycarbonate, polyacetyl cellulose, polyether sulfone or the like.

### BACKGROUND ART

At present, plastics are used in large amounts in various industrial fields including automobile industry and consumer electronic industry. The reason for use of such large amounts of plastics is that in addition to their processability, transparency, etc., they are light in weight, inexpensive and excellent in optical characteristics.

However, plastics are flexible and their surfaces are likely to receive scratch marks, as compared with' e.g. glass, and further, plastics have a drawback that they tend to be easily electrified at the contact surface by friction, as they have high volume resistivity, and the static electricity is hardly removable.

Especially in the display field, along with the shift from CRT to LCD, projectors, PDP, EL panels and further to flat display panels of next generation such as FED, a coating agent for transparent plastics is desired which has a hard coating property for the protection of the front surface of the panel, a permanent antistatic property to prevent adsorption of dust and further a high transparency to obtain a high image quality.

Further, also in other fields, such as semiconductor wafer-storage containers, optical disks, magnetic tapes, other electronic and electric components, printing materials, clean room components in the production site for semiconductors, etc., adsorption of dust due to generation of static electricity is problematic, and in order to overcome such drawbacks, it has been common to apply antistatic treatment and hard coating treatment to the plastic surface.

As a common antistatic hard coating treatment, a method of coating a plastic surface with a hard coating resin composition containing an antistatic agent capable of releasing charged static electricity, is known.

As such a hard coating resin composition, a radiation curable hard coating resin composition has been developed and used in recent years. The radiation curable hard coating resin composition will be cured immediately when irradiated with a radiation such as ultraviolet rays, to form a hard coating film, whereby the treating speed is high, the formed film has excellent performance in hardness, scratch resistance, etc., and the total cost is low. Accordingly, this composition has now become the main material in the hard coating field.

Further, as an antistatic agent, a surface active agent of an ionic electroconductive type or an electroconductive fine powder of an electron conductive type is, for example, known. The surface active agent of an ionic electroconductive type has a feature that by an addition of a small amount, an antistatic property can be obtained, and the antistatic property can be imparted without impairing the transparency, but it has a problem such that its environmental dependency is usually large, and the antistatic performance varies depending on the humidity in the atmosphere.

On the other hand, the electroconductive fine powder of an electron conductive type is capable of imparting an antistatic property without depending on the environment. As such an electroconductive fine powder, a fine powder of carbon, a noble metal such as gold or silver or an electroconductive metal oxide, may, for example, be mentioned. However, carbon or the noble metal has a large absorption in the visible light region and tends to be colored, whereby such is not suitable in a case where transparency is required.

A fine powder of an electroconductive metal oxide shows little absorption in the visible light region. Accordingly, by finely dispersing it in a resin composition, it is possible to impart an antistatic property while maintaining the transparency.

As such an electroconductive metal oxide, a fine powder of antimony-doped tin oxide (hereinafter referred to as ATO) or a tin-doped indium oxide (hereinafter referred to as ITO) is, for example, well known, and Japanese Patent No. 2,655,942 discloses electroconductive resin compositions employing them.

Electroconductive zinc oxide may be mentioned as an electroconductive metal oxide other than ATO or ITO. Up to now, a resin composition employing a fine powder of electroconductive zinc oxide has been disclosed in JP-B-7-84570, JP-B-8-6055, JP-A-4-212734, JP-A-9-34337 or JP-A-2002-275430, and further, JP-A-2002-277609 discloses related applications. The electroconductive zinc oxide is a material having electroconductivity imparted by doping a different element such as aluminum on zinc oxide, and it is a material presenting little environmental load and being rich in resources.

### DISCLOSURE OF THE INVENTION

The present invention relates to a resin composition employing a fine powder of electroconductive zinc oxide and has an object to provide an ultraviolet curable antistatic resin composition excellent in the antistatic property, transparency and hard coating property and a process for its production.

The present invention provides the following:
(1) An antistatic hard coating resin composition curable by ultraviolet irradiation, which comprises electroconductive zinc oxide having an average particle size of primary particles of at most 0.05 µm, as component A, an ultraviolet curable (meth)acrylate having at least one (meth)acryloyl group per molecule, as component B, and a photopolymerization initiator, as component C, wherein the content of component A is from 50 to 95 mass% based on the total amount of components A, B and C.
(2.) The resin composition according to the above (1), which is a composition comprising electroconductive zinc oxide having an average particle size of primary particles of at most 0.05 µm, as component A, an ultraviolet curable (meth)acrylate having at least one (meth)acryloyl group per molecule, as component B, and a photopolymerization initiator, as component C, wherein based on the total amount of components A, B and C, the content of component A is from 50 to 95 mass% and the content of component B is from 5 to 50 mass%, and the content of component C is from 0.1 to 20 mass% to component B, and which further contains a silane coupling agent as a dispersing agent in an amount of from 0.01 to 10 mass% to component A.
(3) The resin composition according to the above (2), which further contains an alcohol as a solvent.
(4) The resin composition according to the above (1), which is a composition comprising electroconductive zinc oxide having an average particle size of primary particles of at most 0.05 µm, as component A, an ultraviolet curable (meth)acrylate having at least one (meth)acryloyl group per molecule, as component B, and a photopolymerization initiator, as component C, wherein based on the total amount of components A, B and C, the content of component A is from 50 to 95 mass% and the content of component B is from 5 to 50 mass%, and the content of component C is from 0.1 to 20 mass% to component B, and which further contains a tertiary amine containing two or more hydroxyl groups per molecule, represented by the following formula (1) or (2), as a dispersing agent in an amount of from 0.01 to 10 mass% to component A.
(5) The resin composition according to the above (4), which further contains an alcohol as a solvent.
(6) The resin composition according to the above (4) or (5), wherein the tertiary amine is triethanolamine, triisopropanolamine, lauryldiethanolamine, or methyldiethanolamine.
(7) An antistatic hard coating film or sheet excellent in transparency, which is provided with an antistatic layer made of a polymer of the resin composition as defined in any one of the above (1) to (6).
(8) An antireflection antistatic film or sheet provided, on the film as defined in the above (7), with a resin composition layer having a lower refractive index than the antistatic layer.
(9) A film or sheet provided with an adhesive agent or a tackifier on one side of the film as defined in the above (7) or (8).
(10) A display provided with the film or sheet as defined in any one of the above (7) to (9).
(11) A process for producing the resin composition as defined in the above (2) or (3), which comprises dispersing electroconductive zinc oxide having an average particle size of primary particles of at most 0.05 µm, in a composition comprising an ultraviolet curable (meth)acrylate having at least one (meth)acryloyl group per molecule, and an alcohol, in the presence of a silane coupling agent.
(12) A process for producing the resin composition as defined in any one of the above (4) to (6), which comprises dispersing electroconductive zinc oxide having an average particle size of primary particles of at most 0.05 µm, in a composition comprising an ultraviolet curable (meth)acrylate having at least one (meth)acryloyl group per molecule, and an alcohol, in the presence of a tertiary amine containing two or more hydroxyl groups per molecule, represented by the following formula (1) or (2).

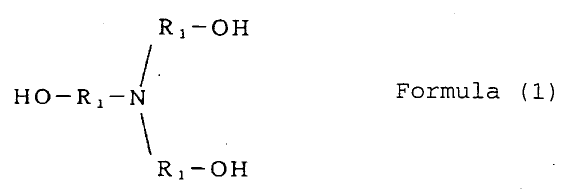

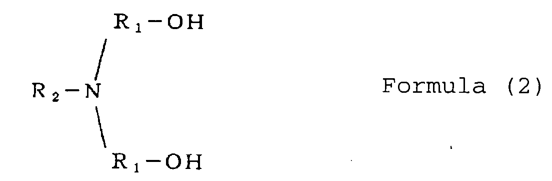

### BEST MODE FOR CARRYING OUT THE INVENTION

Now, the present invention will be described in detail. As the electroconductive zinc oxide as component A, to be used in the present invention, an electroconductive zinc oxide having an average particle size of primary particles of at most 0.05 µm, preferably at most 0.04 µm, is suitable. As a method for measuring the average particle size of the primary particles, a method may be mentioned wherein a transmission electron microscope (TEM) or a scanning electron microscope (SEM) is employed, and the average particle size is obtained by such a method. Further, with respect to the electrical conductivity of the electroconductive zinc oxide, a different atom such as aluminum, tin or gallium is doped on zinc oxide, and its resistance is preferably at most 10 kΩ·cm, particularly preferably at most 1 kΩ·cm.

As such electroconductive zinc oxide satisfying the above-mentioned characteristics, "electroconductive zinc oxide SC-18, manufactured by Sakai Chemical Industry Co., Ltd." may, for example, be mentioned, but it is not particularly limited thereto.

The content of the electroconductive zinc oxide in the antistatic hard coating resin composition curable by ultraviolet irradiation, is preferably from 50 to 95 mass%, more preferably from 70 to 90 mass%, based on the total amount of components A, B and C. If it is less than 50 mass%, the absolute amount of the conductivity-imparting component tends to be deficient, and no adequate antistatic property can be obtained. On the other hand, if it exceeds 95 wt%, the amount of the (meth)acrylate as component B tends to be deficient, whereby the hard coating property tends to deteriorate, and further the adhesion to the substrate also tends to be poor, and peeling is likely to occur, and further, the transparency also tends to deteriorate.

Further, in the case of fine particles where the average particle size of primary particles of the electroconductive zinc oxide is at most 0.05 µm, they have a large cohesive force and tend to form secondary agglomerates. Therefore, in order to obtain a transparent resin composition, it is preferred to finely disperse such secondary agglomerates. As a method for finely dispersing the electroconductive zinc oxide, a wet pulverization method is suitable. As such a wet pulverization method, a media type such as a ball mill, a paint shaker, a side grinder or an attritor, or a non-media type such as a homogenizer, a disperser, a jet mill, a colloid mill, a roll mill or an ultrasonic wave, may be mentioned, but the method is not particularly limited thereto. Further, two or more of such pulverization methods may be used in combination.

The ultraviolet curable (meth)acrylate as component B to be used in the present invention may optionally be selected from (meth)acrylates which have at least one (meth)acryloyl group per molecule and which are curable by ultraviolet rays, and such (meth)acrylates may be used alone or in combination as a mixture.

Specific examples of such (meth)acrylate include 2-hydroxyethyl (meth)acrylate, 2-hydroxypropyl (meth)acrylate, isobutyl (meth)acrylate, t-butyl (meth)acrylate, 2-ethylhexyl (meth)acrylate, stearyl acrylate, 2-ethylhexylcarbitol acrylate, butoxyethyl acrylate, diethoxyethyl acrylate, methoxytriethylene glycol acrylate, methoxypolyethylene glycol acrylate, stearyl (meth)acrylate, cyclohexyl (meth)acrylate, tetrahydrofurfuryl (meth)acrylate, isobornyl (meth)acrylate, dicyclopentenyl (meth)acrylate, dicyclopentanyl (meth)acrylate, dicyclobenzyl acrylate, dicyclopentenyl ethylene glycol adduct (meth)acrylate, phenylglycidylether epoxyacrylate, phenoxyethyl (meth)acrylate, phenoxy(poly)ethylene glycol acrylate, nonylphenol ethoxylated acrylate, acryloyloxyethyl phthalic acid, tribromophenyl acrylate, tribromophenol ethoxylated (meth)acrylate, methyl methacrylate, tribromophenyl methacrylate, methacryloyloxyethyl acid, methacryloyloxyethyl maleic acid, methacryloyloxyethylphthalic acid, polyethylene glycol (meth)acrylate, polypropylene glycol (meth)acrylate, β-carboxyethyl acrylate, N-methylol acrylamide, N-methoxymethyl acrylamide, N-ethoxymethyl acrylamide, N-n-butoxymethyl acrylamide, t-butyl acrylamide sulfonic acid, N-methyl acrylamide, N-dimethyl acrylamide, N-dimethylaminoethyl (meth)acrylate, N-dimethylaminopropyl acrylamide, acryloylmorpholine, diglycidyl (meth)acrylate, N-butyl methacrylate, ethyl methacrylate, allyl methacrylate, cetyl methacrylate, pentadecyl methacrylate, methoxy polyethylene glycol (meth)acrylate, diethylaminoethyl (meth)acrylate, methacryloyloxyethyl succinic acid, imide (meth)acrylate, hexanediol diacrylate, neopentyl glycol diacrylate, triethylene glycol diacrylate, polyethylene glycol diacrylate, polypropylene glycol diacrylate, neopentyl hydroxyl pivalate, pentaerythritol diacrylate monostearate, glycol diacrylate, 2-hydroxyethyl methacryloyl phosphate, bisphenol A/ethylene glycol adduct acrylate, bisphenol F/ethylene glycol adduct acrylate, tricyclodecanemethanol diacrylate, trishydroxyethylisocyanurate diacrylate, 2-hydroxy-1-acryloxy-3-methacryloxypropane, trimethylol propane triacrylate, trimethylolpropane/ethylene glycol adduct triacrylate, trimethylolpropane/propylene glycol adduct triacrylate, pentaerythritol triacrylate, trisacryloyloxyethyl phosphate, trishydroxyethyl isocyanurate triacrylate, modified ε-caprolacton acrylate, trimethylolpropane ethoxy triacrylate, glycelol/propylene glycol adduct triacrylate, pentaerythritol tetraacrylate, pentaerythritol/ethylene glycol adduct tetraacrylate, ditrimethylolpropane tetraacrylate, dipentaerythritol hexa(penta)acrylate, dipentaerythritol monohydroxy pentaacrylate, urethane acrylate, epoxy acrylate and polyester acrylate, but specific examples are not limited thereto.

These compounds may be used alone or in combination as an optional mixture. However, preferred is a polyfunctional (meth)acrylate monomer or oligomer having two or more (meth)acryloyl groups per molecule, whereby the coating film after polymerization will be hard and excellent in scratch resistance. The content of such an ultraviolet curable (meth)acrylate is preferably from 5 to 50 mass%, more preferably from 10 to 30 mass%, based on the total amount of components A, B and C.

Further, the photopolymerization initiator as component C to be used in the present invention, is one to be incorporated to accelerate photocuring of the resin composition by sensitization with active light rays such as ultraviolet rays or visible light rays. Known various photopolymerization initiators may be used.

Specific examples of the photopolymerization initiator include 1-hydroxycyclohexylphenyl ketone, benzophenone, p-methoxybenzophenone, acetophenone, propiophenone, thioxanthone, benzyl dimethyl ketal, 2,2-diethoxy-2-phenylacetophenone, benzoin methyl ether, benzoin ethyl ether, p-chlorobenzophenone, 4-benzoyl-4-methyldiphenyl sulfide, 2-benzyl-2-dimethylamino-1-(4-morpholinophenyl)-butanone-1, and 2-methyl-1[4-(methylthio)phenyl]-2-morpholinopropane-1. The content of the photopolymerization initiator is from 0.1 to 20 mass%, preferably from 0.5 to 15 mass%, based on the (meth)acrylate as component B. If the content is too small, the curability decreases, such being undesirable. If it is too much, the strength of the coating film after polymerization tends to be low.

In the present invention, in order to form an antistatic hard coating on the surface of a plastic film or sheet, the above resin composition is preferably dispersed in a suitable solvent and used as an antistatic hard coating resin composition curable by ultraviolet irradiation.

By having the resin composition dispersed in a solvent, the leveling property will be improved at the time of forming a coating film on the surface of a plastic film or sheet, and it will be possible to form the coating film of the resin composition of the present invention to be smooth and flat. As a result, it is possible to suppress deterioration of the transparency and the hard coating property due to irregularities on the surface of the coating film.

Further, by having the resin composition dispersed in a solvent, the dispersibility of the electroconductive zinc oxide will be improved, and consequently, it is possible to improve the transparency of the coating film.

As the solvent component in which the resin composition is dispersed, an alcohol is preferred such as methyl alcohol, ethyl alcohol, isopropyl alcohol or butyl alcohol. Further, water or an aromatic or aliphatic organic solvent such as toluene, xylene, ethyl acetate or a ketone', may also be used alone or in combination with the above-mentioned alcohol.

Further, in order to obtain the composition of the present invention having the electroconductive zinc oxide particles, etc., stably dispersed in a solvent, it is preferred to add a surfactant such as a nonionic, cationic or anionic surfactant, or a coupling agent such as a silane coupling agent, to a solvent in which a dispersant for e.g. the resin composition, is dispersed. Among them, a silane coupling agent is particularly preferred.

By adding such a silane coupling agent, it is possible to suppress reagglomeration of the electroconductive zinc oxide fine particles dispersed in the resin composition and thereby to suppress the decrease of the transparency during the formation of the coating film, or to suppress a fluctuation in the antistatic property.

A preferred silane coupling agent to be used in the present invention may be represented by the following formula (3) or (4), wherein n is 0 or an integer of from 1 to 8, m is 0 or an integer of from 1 to 3, p is an integer of at least 1, R¹ is a hydrogen atom, an alkyl group such as a methyl group, an ethyl group or a propyl group, a methacryloyl group, a vinyl group, an amino group, an epoxy group, a mercapto group or a halogen atom. Further, R² is a C₁₋₃ alkoxy group.

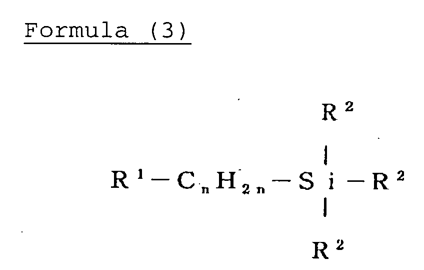

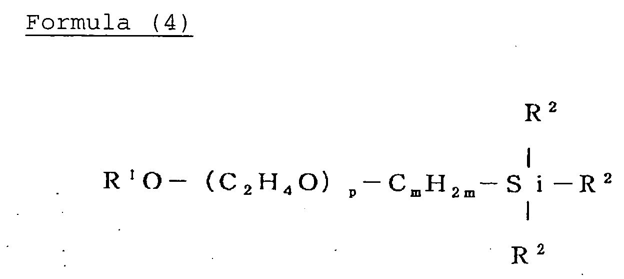

Specific examples of the silane coupling agent to be used in the present invention include alkyl alkoxy silanes such as vinyltrimethoxysilane, vinyltriethoxysilane, γ-methacryloxypropyltrimethoxysilane, γ-methacryloxypropyltriethoxysilane, γ-aminopropyltriethoxysilane, γ-glycidoxypropyltrimethoxysilane, γ-chloropropyltrimethoxysilane, γ-mercaptopropyltrimethoxysilane, N-propyltriethoxysilane and N-octyltriethoxysilane, and polyether-modified alkoxysilanes. Particularly from the viewpoint of the affinity with the ultraviolet curable (meth)acrylate as component B and the alcohol as the above-mentioned solvent component, preferred are alkylalkoxysilanes such as vinyltrimethoxysilane, vinyltriethoxysilane, γ-methacryloxypropyltrimethoxysilane, γ-methacryloxypropyltriethoxysilane, γ-glycidoxypropyl trimethoxysilane, n-propyltriethoxysilane and N-octyltriethoxysilane, and non-ionic silane coupling agents such as polyether-modified alkoxysilanes.

The amount of the silane coupling agent is preferably within a range of from 0.001 to 10 mass%, more preferably within a range of from 0.01 to 5 mass%, based on the mass of the electroconductive zinc oxide. If it is less than 0.001 mass%, reagglomeration can not be suppressed, and consequently, the transparency of the coating film tends to deteriorate, and if it exceeds 10 mass%, the antistatic property and the hard coating property of the coating film tend to deteriorate.

Further, as a dispersing agent to disperse the electroconductive zinc oxide in the solvent, an amine compound may also be used effectively. As such an amine compound, an amine compound containing two or more hydroxyl groups per molecule, represented by the following formula (1) or (2), is preferred, and an amine compound as a tertiary amine is further preferred.

By adding such an amine compound, the electroconductive zinc oxide can be dispersed in the solvent in a state extremely close to monodisperse state, and reagglomeration of the electroconductive zinc oxide can be suppressed. Accordingly, an antistatic hard coating resin composition excellent in transparency can be obtained.

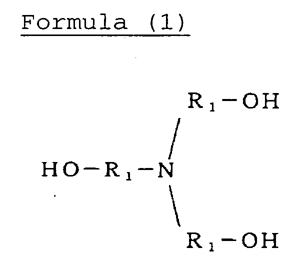

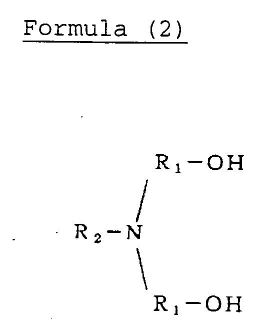

In the above formulae, R¹ is an alkyl chain represented by CₙH₂ₙ, where n is an integer of from 1 to 4. Further, R² is an alkyl chain represented by CH₃-CₘH₂ₘ, where m is an integer of from 0 to 20.

As such an amine compound, triethanolamine, triisopropanolamine, lauryldiethanolamine or methyldiethanolamine may, for example, be mentioned. However, it is not limited thereto, and these compounds may be used alone or in combination as a mixture.

Such an amine compound is preferably within a range of from 0.001 mass% to 10 mass%, more preferably from 0.01 mass% to 5 mass%, based on the mass of the electroconductive zinc oxide. If it is less than 0.001 mass%, reagglomeration can not be suppressed, and consequently, the transparency of the coating film tends to be low, and if it exceeds 10 mass%, the antistatic property and the hard coating property of the coating film tend to deteriorate.

Further, to the resin composition of the present invention, additives such as a slipping agent, an antioxidant, a curing accelerator, a thixotropic agent, a leveling agent, a defoaming agent and a pH controlling agent, may be added, as the case requires. Further, for the purpose of improving the adhesion to the substrate, a polymer such as an acrylic resin, a polyester resin, a butyral resin or a urethane resin may also be added.

As a method for producing a resin composition of the present invention and as a method for coating the composition on the surface of a film or sheet, the following methods may, for example, be mentioned.

At least one ultraviolet-curable (meth)acrylate monomer is added to a dispersion having the electroconductive zinc oxide preliminarily finely dispersed in an alcohol solvent by means of the above-mentioned amine compound, and a photopolymerization initiator is further dissolved to obtain the desired coating fluid composition. However, the'method of mixing these respective components is not particularly limited to this particular order.

The resin composition dispersed in the above solvent is coated on the surface of a transparent film or sheet in a single layer, dried to evaporate the solvent and then irradiated with ultraviolet rays for instantaneous curing to obtain an antistatic film or sheet which is provided with the resin composition of the present invention and which is transparent and excellent in scratch resistance.

As the method for coating the resin composition dispersed in the solvent on the surface of the film or sheet, a conventional method may be employed such as a dipping method, a gravure coating method, a roll coating method, a bar coating method or a spraying method.

The thickness of the coating film to be formed on the film or sheet is preferably from 0.01 to 50 µm, particularly preferably from 0.1 to 10 µm. If it is less than 0.01 µm, the antistatic property or the hard coating property tends to be inadequate, and if it exceeds 50 µm, the transparency tends to be inadequate or the substrate tends to curl.

The plastic film or sheet as the substrate usually has a thickness of from 0.0001 to 10 mm, preferably from 0.0005 to 5 mm, and its preferred material may, for example, be a plastic film of e.g. polyethylene, polypropylene, polystyrene, polyvinyl chloride, polyamide, polyurethane, polyester, polyacryl, polycarbonate, triacetyl cellulose or polyether sulfone. Such a substrate is preferably one having high transparency, but a colored film or sheet may be employed if desired.

The present invention is an antistatic hard coating resin composition curable by ultraviolet irradiation and excellent in the hard coating property, antistatic property and transparency and thus exhibits distinct effects for covering the surface of a plastic film or sheet made of e.g. polyester, acryl, polycarbonate, triacetyl cellulose or polyether sulfone.

### EXAMPLES

Now, the present invention will be described in further detail with reference to Examples and Comparative Examples, but it should be understood that the present invention is by no means restricted to such Examples. In the following description, "parts" means parts by weight, unless otherwise specified.

### EXAMPLE 1

### Method for preparing a dispersion of electroconductive zinc oxide

Using isopropyl alcohol (hereinafter referred to as IPA) as a dispersing solvent, 240 parts of IPA, 3.2 parts of γ-methacryloxypropylmethoxysilane, 160 parts of electroconductive zinc oxide (SC-18, manufactured by Sakai Chemical Industry Co., Ltd.) and 2,500 parts of zirconia beads having a diameter of 1 mm were blended in this order, and dispersing treatment was carried out for 3 hours by a paint shaker. From the obtained dispersion, the zirconia beads were removed, and IPA was further added to adjust the concentration, to obtain an electroconductive zinc oxide IPA dispersion having an electroconductive zinc oxide concentration of 20 mass%.

### Method for preparing a resin composition dispersed in a solvent

To 375 parts of the obtained electroconductive zinc oxide IPA dispersion, 22 parts of pentaerythritol triacrylate (hereinafter referred to also as PETA) as a resin component, and 3 parts of benzyl dimethyl ketal as a photopolymerization initiator, were added, followed by stirring until the photopolymerization initiator was dissolved, to obtain a desired coating fluid composition. The content of the electroconductive zinc oxide in the solid content was 75 wt%.

### Method for preparing a film

The obtained resin composition dispersed in the solvent was coated on a polyester film ("A4300", manufactured by TOYOBO CO., LTD) by a bar coater so that the film thickness after drying would be 5 µm, dried for two minutes in a hot air drier of from 60 to 70°C and then, irradiated in a nitrogen atmosphere with ultraviolet rays of an accumulated irradiation dose of 500 mJ/cm² by means of an electrodeless discharge lamp manufactured by Fusion Company, to form a coating film.

### EXAMPLE 2

A resin composition dispersed in a solvent was obtained in the same manner as in Example 1 except that in the method for preparing the electroconductive zinc oxide dispersion in Example 1, the amount of γ-methacryloxypropyltrimethoxysilane was changed to 6.4 parts, whereby the content of the electroconductive zinc oxide in the solid content was 75 mass%. Thereafter, a coating film was formed in the same manner as in Example 1.

### EXAMPLE 3

A resin composition dispersed in a solvent was obtained in the same manner as in Example 1 except that in the method for preparing the electroconductive zinc oxide dispersion in Example 1, γ-methacryloxypropyltrimethoxysilane was changed to a polyether-modified alkoxysilane, whereby the content of the electroconductive zinc oxide in the solid content was 75 mass%. Thereafter, a coating film was formed in the same manner as in Example 1.

### EXAMPLE 4

A resin composition dispersed in a solvent was obtained in the same manner as in Example 1 except that in the method for preparing the resin composition dispersed in a solvent in Example 1, the blend amounts were changed to 350 parts of the electroconductive zinc oxide IPA dispersion, 26 parts of PETA as the resin component, and 4 parts of benzyl dimethyl ketal as the photopolymerization initiator, whereby the content of the electroconductive zinc oxide in the solid content was 70 mass%. Thereafter, a coating film was formed in the same manner as in Example 1.

### EXAMPLE 5

A resin composition dispersed in a solvent was obtained in the same manner as in Example 1 except that in the method for preparing the resin composition dispersed in a solvent in Example 1, 22 parts of a polyfunctional urethane acrylate (UV-7600B, manufactured by Nippon Synthetic Chemical Industry Co., Ltd.,) as a resin component, and 3 parts of benzyl dimethyl ketal as a photopolymerization initiator, were added, whereby the content of the electroconductive zinc oxide in the solid content was 75 mass%. Thereafter, a coating film was formed in the same manner as in Example 1.

### COMPARATIVE EXAMPLE 1

A resin composition dispersed in a solvent was obtained in the same manner as in Example 1 except that in Example 4, electroconductive zinc oxide having an average particle size of primary particles of 3.4 µm and a volume resistivity of 62 Ω·cm was employed, whereby the content of the electroconductive zinc oxide in the solid content was 70 mass%. Thereafter, a coating film was formed in the same manner as in Example 1.

### COMPARATIVE EXAMPLE 2

A dispersion was prepared in the same manner as in Example 1. Then, the obtained dispersion was coated on a polyester film by a bar coater, and dried for two minutes in a hot air drier of from 60 to 70°C to form a coating film.

### COMPARATIVE EXAMPLE 3

A resin composition dispersed in a solvent was obtained in the same manner as in Example 1 except that in the method for preparing a dispersion in Example 1, 240 parts of IPA, 160 parts of electroconductive zinc oxide, and 2,500 parts of zirconia beads having a diameter of 1 mm, were blended in this order, and dispersing treatment was carried out for 3 hours by a paint shaker, whereby the content of the electroconductive zinc oxide in the solid content was 75 mass%. Thereafter, a coating film was formed in the same manner as in Example 1.

### COMPARATIVE EXAMPLE 4

A resin composition dispersed in a solvent was obtained in the same manner as in Example 1 except that in the method for preparing a dispersion in Example 1, 240 parts of IPA, 24 parts of γ-methacryloxypropylmethoxysilane, 160 parts of the electroconductive zinc oxide, and 2,500 parts of zirconia beads having a diameter of 1 mm, were blended in this order, and dispersing treatment was carried out for 3 hours by a paint shaker, whereby the content of the electroconductive zinc oxide in the solid content was 75 mass%. Thereafter, a coating film was formed in the same manner as in Example 1.

### COMPARATIVE EXAMPLE 5

A resin composition dispersed in a solvent was obtained in the same manner as in Example 1 except that in the method for preparing a resin composition dispersed in a solvent in Example 1, the blending amounts were changed to 150 parts of the electroconductive zinc oxide IPA dispersion, 66 parts of PETA as a resin component, and 4 parts of benzyl dimethyl ketal as a photopolymerization initiator, whereby the content of the electroconductive zinc oxide in the solid content was 30 wt%. Thereafter, a coating film was formed in the same manner as in Example 1.

### COMPARATIVE EXAMPLE 6

A resin composition dispersed in a solvent was obtained in the same manner as in Example 1 except that in the method for preparing a resin composition dispersed in a solvent in Example 1, the blending amounts were changed to 350 parts of the electroconductive zinc oxide IPA dispersion, and 25 parts of a polyester resin as a resin component, whereby the content of the electroconductive zinc oxide in the solid content was 75 wt%. Thereafter, the obtained resin composition dispersed in the solvent was coated on a polyester film by a bar coater so that the dried film thickness would be 5 µm, and then dried for two minutes in a hot air drier of from 60 to 70°C to form a coating film.

The values of the surface resistivity, total light transmittance, haze and pencil hardness of each film thus obtained are shown in Tables 1, 2 and 3. Here, the test methods for the properties are as follows.

### Surface resistivity

Measured in accordance with JIS K6911 at an applied voltage of 1,000 V using a resistance measuring apparatus (manufactured by ADVANTEST CORPORATION).

### Total light transmittance and haze

Measured in accordance with JIS K7361 and JIS K7136 using a haze meter (manufactured by Suga Test Instruments Co., Ltd.).

### Pencil hardness

Measured in accordance with JIS K5400 under a load of 1 kg, using a scratch tester (manufactured by KASAI K.K.).

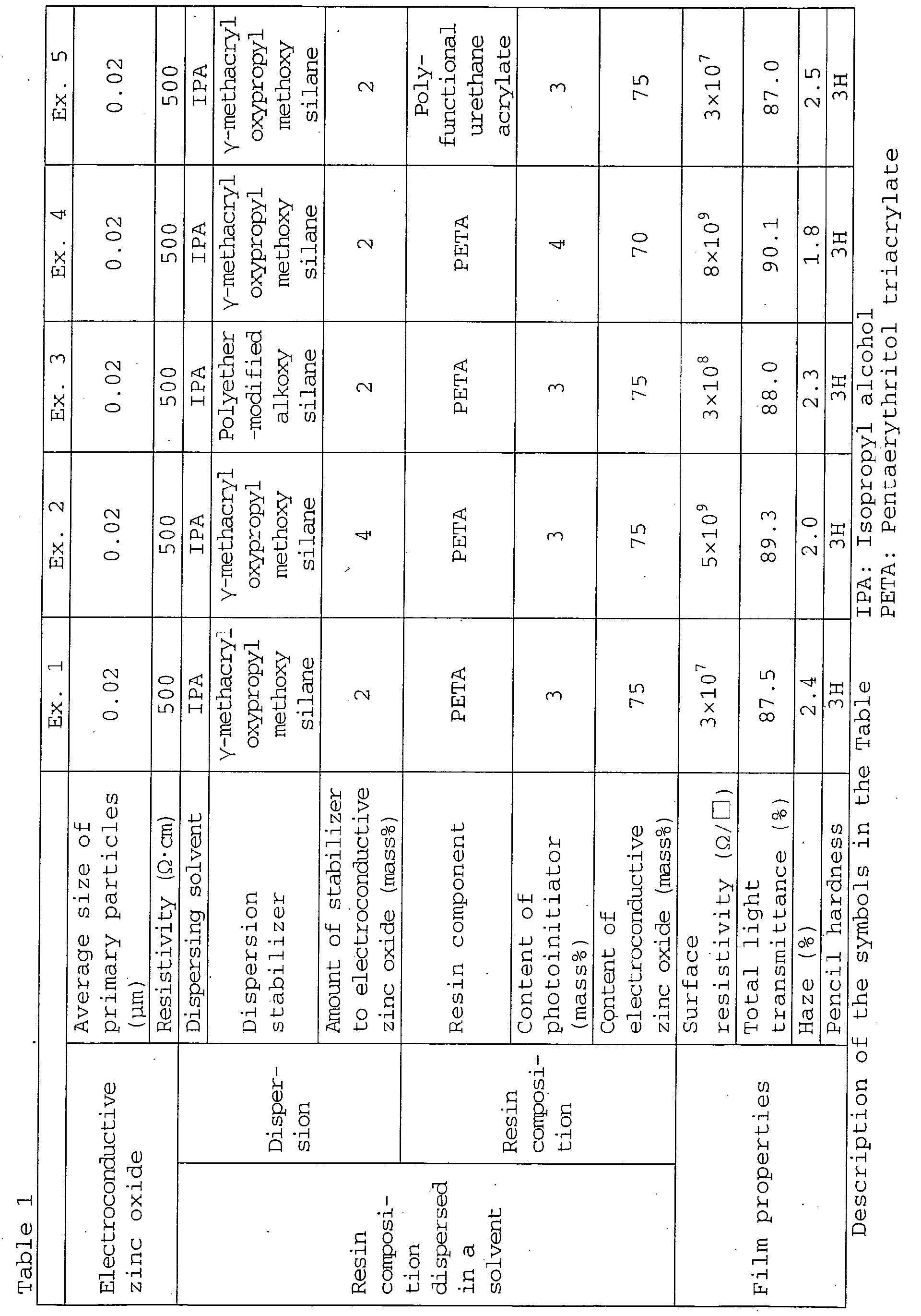

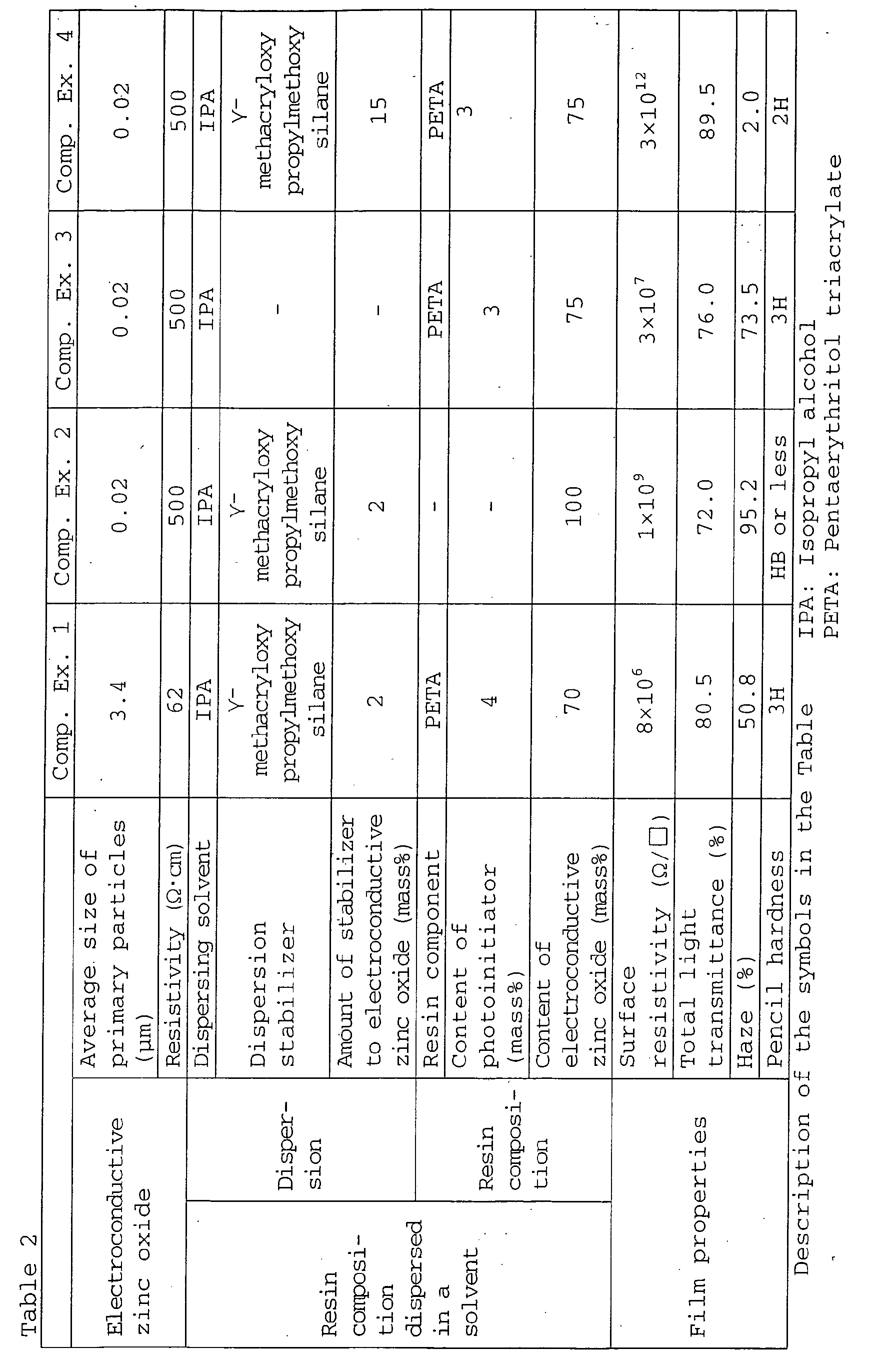

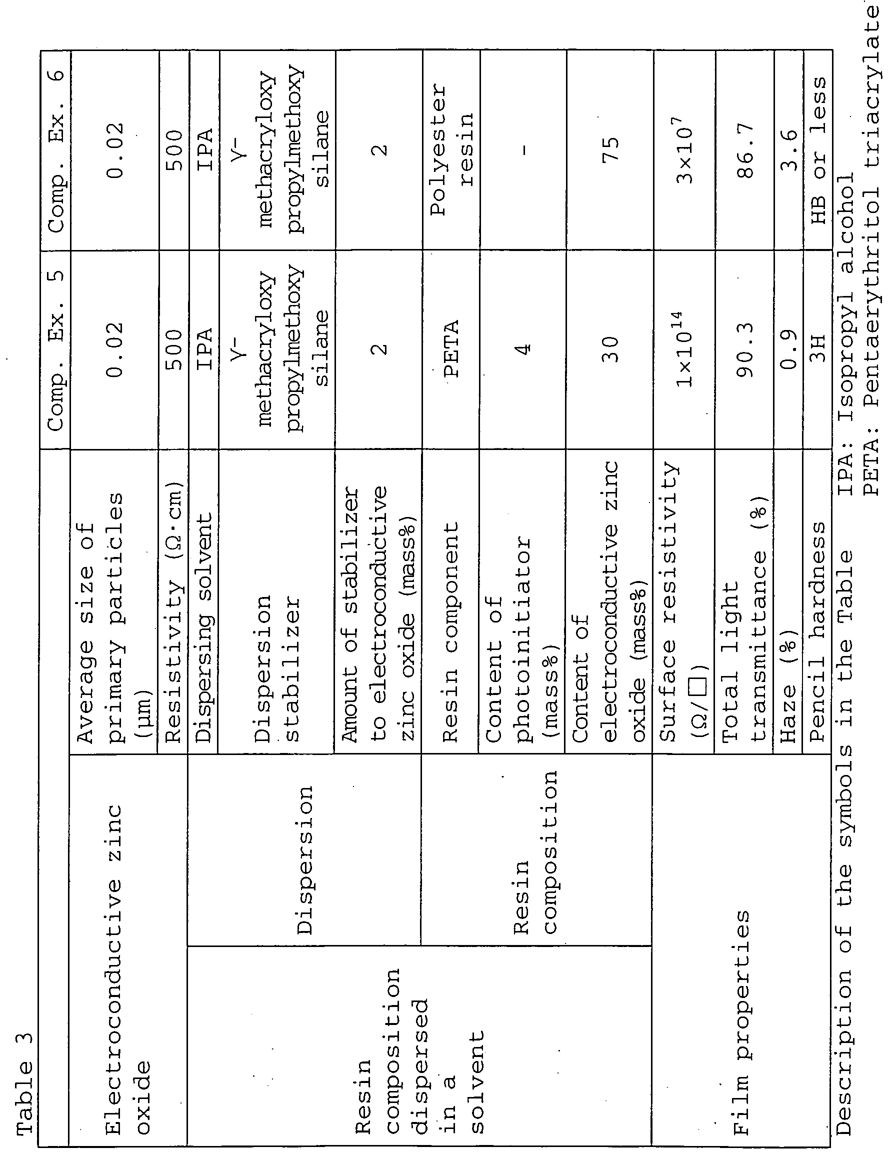

### EXAMPLE 6

### Method for preparing a dispersion

Using 2,800 parts of IPA as a dispersing solvent, 36 parts of triethanolamine as a dispersant, and 1,200 parts of electroconductive zinc oxide (SC-18, Sakai Chemical Industry Co., Ltd.) having an average size of primary particles of 0.02 µm and a powder resistivity of 500 Ω·cm, as electroconductive fine particles, dispersing treatment was carried out for a retention time of 30 minutes in a circulation system beads mill employing zirconia beads having a diameter of 0.1 mm. From the obtained dispersion, the zirconia beads were removed, and IPA was further added to adjust the concentration, to obtain an electroconductive zinc oxide IPA dispersion having an electroconductive zinc oxide concentration of 20 mass%.

### Method for preparing a coating agent

To 381 parts of the obtained electroconductive zinc oxide IPA dispersion, 19 parts of a pentaerythritol triacrylate/pentaerythritol tetraacrylate mixture (KAYARAD PET-30, manufactured by Nippon Kayaku Co., Ltd.) as a resin component and 2 parts of benzyl dimethyl ketal as a photopolymerization initiator, were added, followed by stirring until the photopolymerization initiator was dissolved, to obtain a desired coating fluid composition. The content of the electroconductive zinc oxide in the solid content was 80 mass%.

### Method for preparing a film

The obtained resin composition dispersed in the solvent was coated on a polyester film (A4300, manufactured by TOYOBO CO., LTD) by a bar coater so that the film thickness after drying would be 5 µm, dried for from 1 to 2 minutes in a hot air drier of from 60 to 80°C and then, irradiated in a nitrogen atmosphere with ultraviolet rays (360 nm) of an accumulated irradiation dose of 500 mJ/cm² by means of a metal halide lamp, to form a coating film.

The values of the surface resistivity, total light transmittance, haze and pencil hardness of the obtained film are shown as 1-2 in Table 4.

Further, the values of the surface resistivity, total light transmittance, haze and pencil hardness of each film obtained in the same manner as above using the formulations of the dispersion and the coating agent having the compositions as identified in Table 4, 5 or 6, are shown as Examples or Comparative Examples in Table 4, 5 or 6.

Here, with respect to one wherein separation and precipitation of electroconductive fine particles were observed by visual observation after 7 days from the preparation of the dispersion, the subsequent study was stopped.

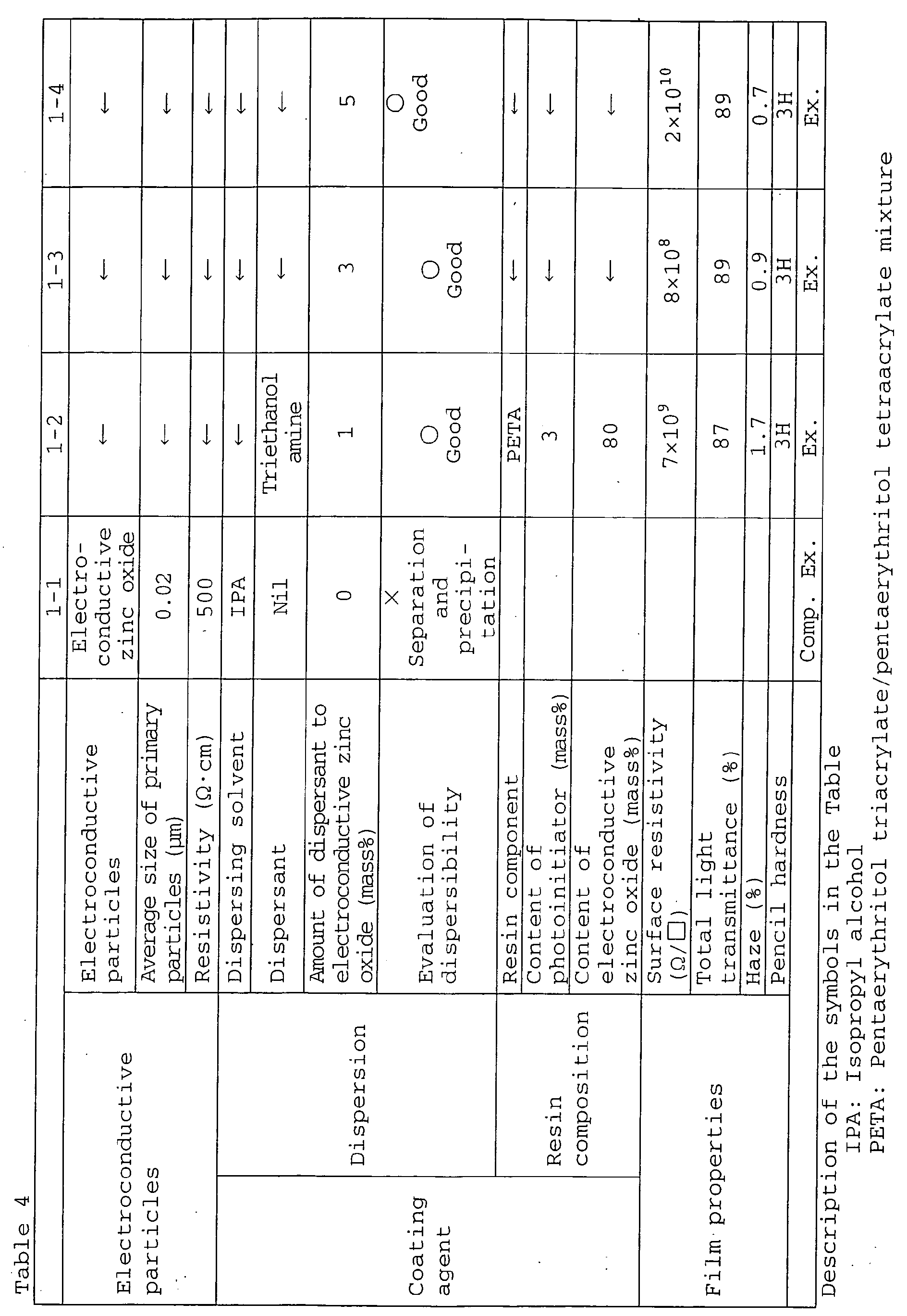

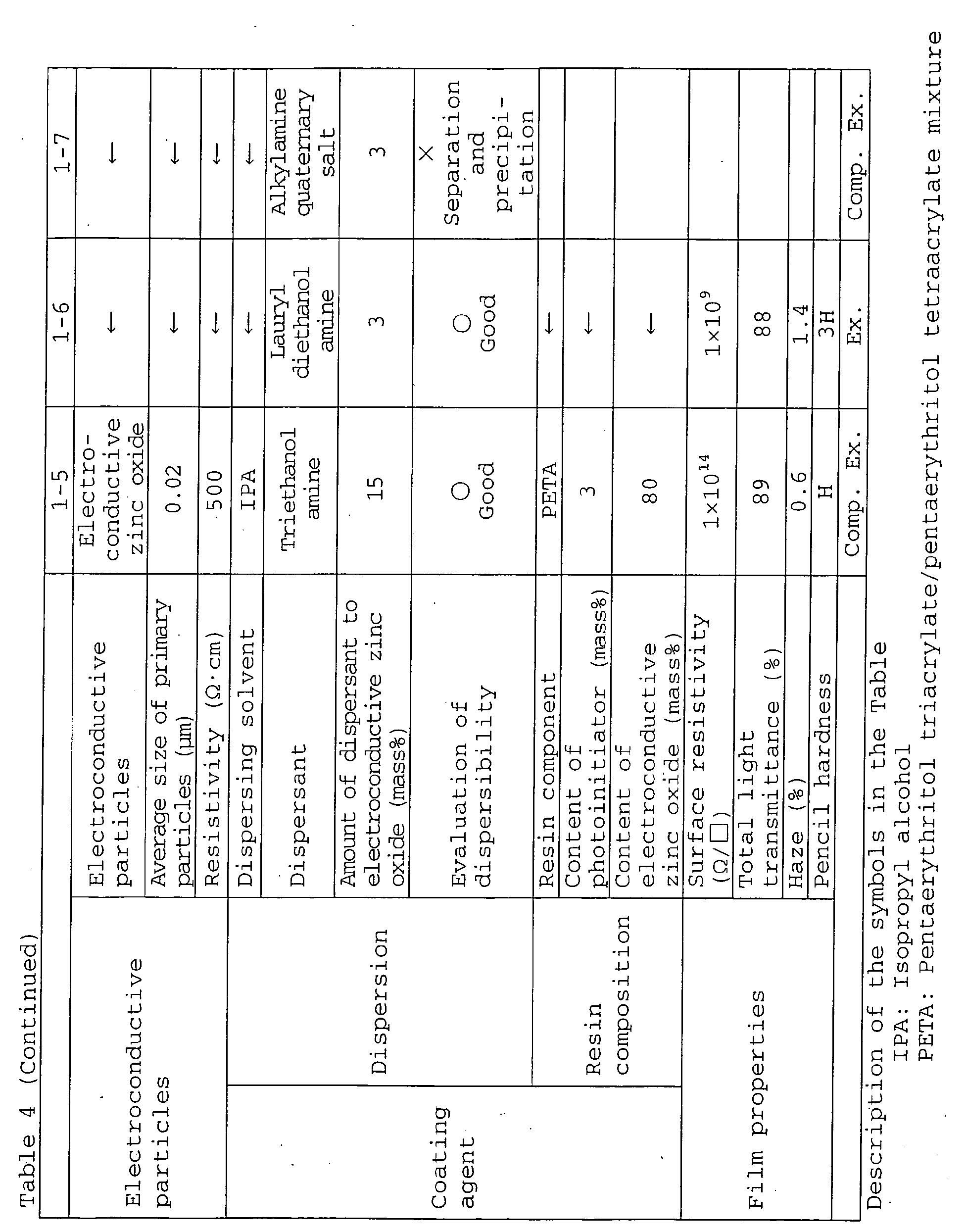

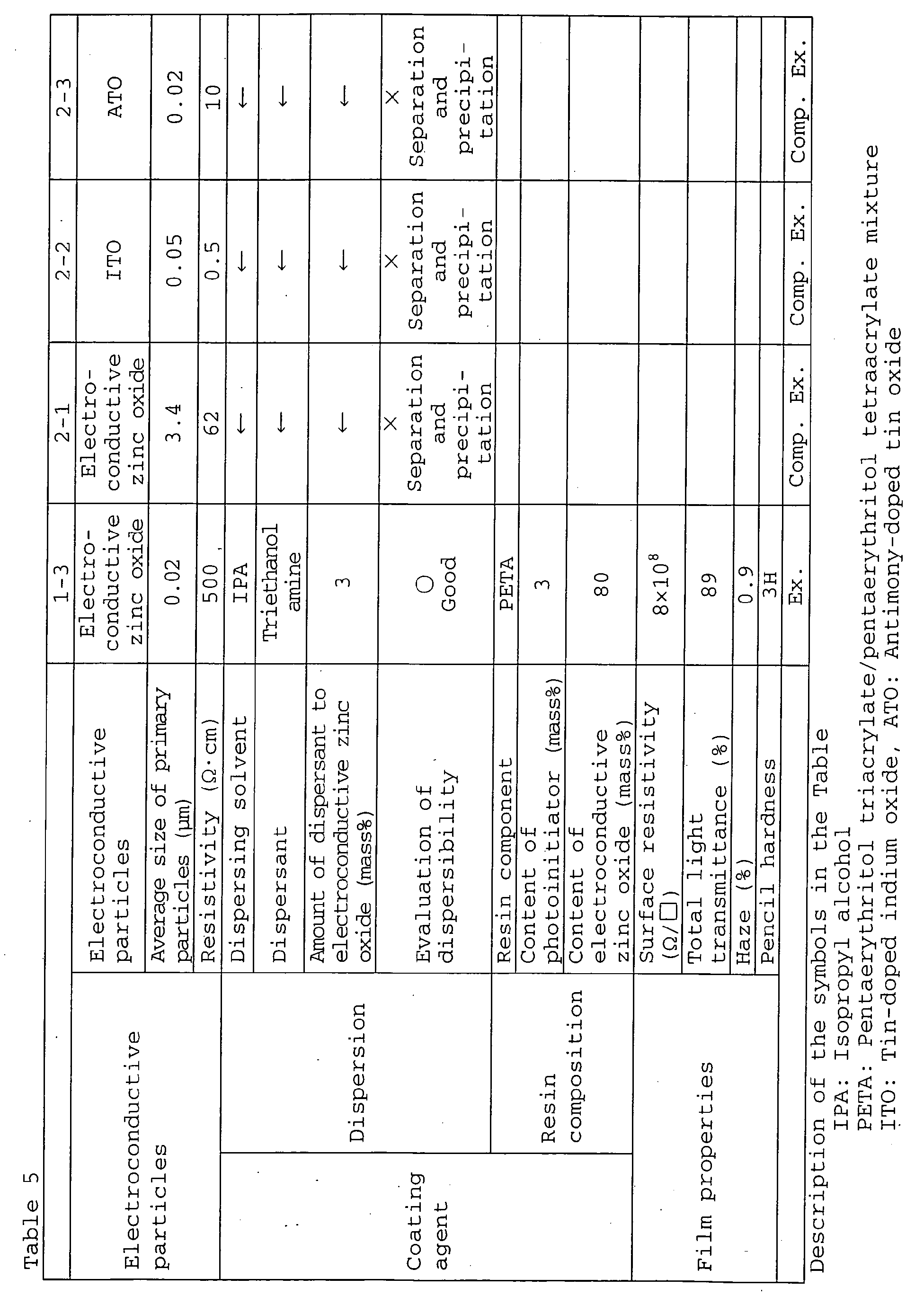

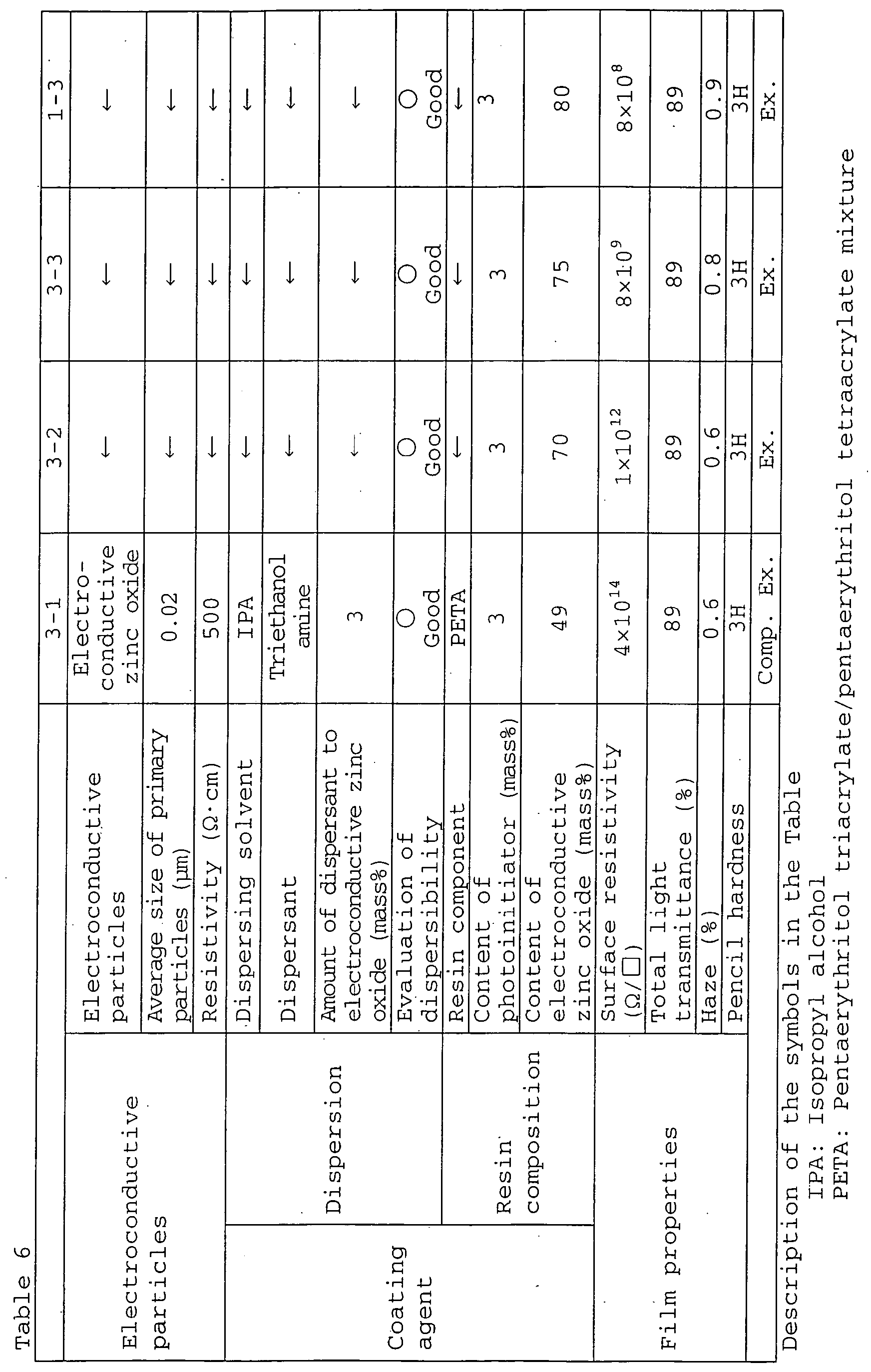

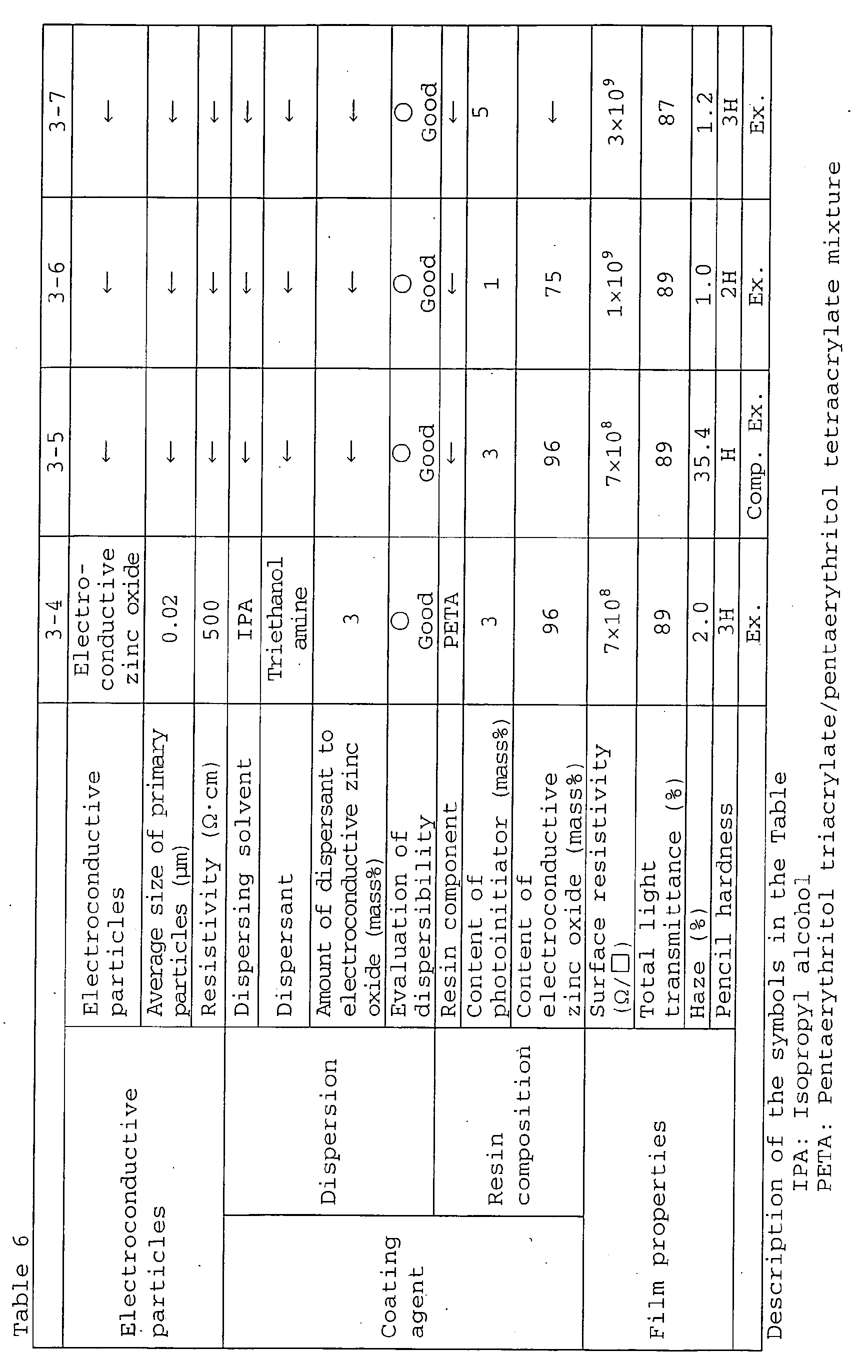

### INDUSTRIAL APPLICABILITY

The present invention is an antistatic hard coating resin composition curable by ultraviolet irradiation excellent in hard coating property, antistatic property and transparency and thus exhibits distinct effects for covering the surface of a plastic film or sheet made of e.g. polyester, acryl, polycarbonate, triacetyl cellulose or polyether sulfone.

## Claims

1. An antistatic hard coating resin composition curable by ultraviolet irradiation, which comprises electroconductive zinc oxide having an average particle size of primary particles of at most 0.05 µm, as component A, an ultraviolet curable (meth)acrylate having at least one (meth)acryloyl group per molecule, as component B, and a photopolymerization initiator, as component C, wherein the content of component A is from 50 to 95 mass% based on the total amount of components A, B and C.

2. The resin composition according to Claim 1, which is a composition comprising electroconductive zinc oxide having an average particle size of primary particles of at most 0.05 µm, as component A, an ultraviolet curable (meth)acrylate having at least one (meth)acryloyl group per molecule, as component B, and a photopolymerization initiator, as component C, wherein based on the total amount of components A, B and C, the content of component A is from 50 to 95 mass% and the content of component B is from 5 to 50 mass%, and the content of component C is from 0.1 to 20 mass% to component B, and which further contains a silane coupling agent as a dispersing agent in an amount of from 0.01 to 10 mass% to component A.

3. The resin composition according to Claim 2, which further contains an alcohol as a solvent.

4. The resin composition according to Claim 1, which is a composition comprising electroconductive zinc oxide having an average particle size of primary particles of at most 0.05 µm, as component A, an ultraviolet curable (meth)acrylate having at least one (meth)acryloyl group per molecule, as component B, and a photopolymerization initiator, as component C, wherein based on the total amount of components A, B and C, the content of component A is from 50 to 95 mass% and the content of component B is from 5 to 50 mass%, and the content of component C is from 0.1 to 20 mass% to component B, and which further contains a tertiary amine containing two or more hydroxyl groups per molecule, represented by the following formula (1) or (2), as a dispersing agent in an amount of from 0.01 to 10 mass% to component A:

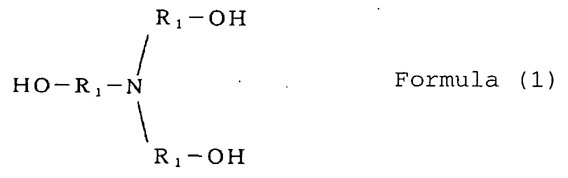

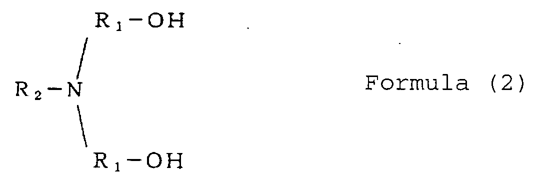

5. The resin composition according to Claim 4, which further contains an alcohol as a solvent.

6. The resin composition according to Claim 4 or 5, wherein the tertiary amine is triethanolamine, triisopropanolamine, lauryldiethanolamine, or methyldiethanolamine.

7. An antistatic hard coating film or sheet excellent in transparency, which is provided with an antistatic layer made of a polymer of the resin composition as defined in any one of Claims 1 to 6.

8. An antireflection antistatic film or sheet provided, on the film as defined in Claim 7, with a resin composition layer having a lower refractive index than the antistatic layer.

9. A film or sheet provided with an adhesive agent or a tackifier on one side of the film as defined in Claim 7 or 8.

10. A display provided with the film or sheet as defined in any one of Claims 7 to 9.

11. A process for producing the resin composition as defined in Claim 2 or 3, which comprises dispersing electroconductive zinc oxide having an average particle size of primary particles of at most 0.05 µm, in a composition comprising an ultraviolet curable (meth)acrylate having at least one (meth)acryloyl group per molecule, and an alcohol, in the presence of a silane coupling agent.

12. A process for producing the resin composition as defined in any one of Claims 4 to 6, which comprises dispersing electroconductive zinc oxide having an average particle size of primary particles of at most 0.05 µm, in a composition comprising an ultraviolet curable (meth)acrylate having at least one (meth)acryloyl group per molecule, and an alcohol, in the presence of a tertiary amine containing two or more hydroxyl groups per molecule, represented by the following formula (1) or (2) :
